# EUROPÄISCHE PATENTANMELDUNG

(11) **EP 0 527 338 A1**
(43) Veröffentlichungstag der Anmeldung: **17.02.1993**
(21) Anmeldenummer: 92111810.5
(22) Anmeldetag: 10.07.1992
(51) Int. Cl.: H01S 3/07, H01S 3/03, H01S 3/041, H01S 3/036

(54) **Einrichtung zur Erzeugung eines Laserstrahles mit einem Laserresonator**

(30) Priorität: 12.08.1991 AT 1587/91
(71) Anmelder: SCHABLONENTECHNIK KUFSTEIN GESELLSCHAFT M.B.H., A-6330 Kufstein (AT)
(72) Erfinder: Achrainer, Jacob, -Ing., A-6361 Hopfgarten (AT); Als, Andreas, -Ing., A-6300 Wörgl (AT); Kruckenhauser, Klaus, -Ing., A-6330 Kufstein (AT)
(74) Vertreter: TER MEER - MÜLLER - STEINMEISTER & PARTNER

(57) **Zusammenfassung**

Bei einer Einrichtung zur Erzeugung eines Laserstrahles mit einem Laserresonator bestehend aus Laserresonatorröhren (14), einem Umlenkspiegelblock (11) und einem Auskoppelblock (8) sind in einer geometrisch baulichen Aufeinanderfolge steife und nachgiebige Elemente für die Halterung der optischen Bauelemente (11, 8) und der Laserresonatorröhren (14) vorgesehen.

## Beschreibung

Die Erfindung betrifft eine Einrichtung zur Erzeugung eines Laserstrahles mit einem Laserresonator bestehend aus Laserresonatorröhren, einem Umlenkspiegelblock und einem Auskoppelblock, die in einer bestimmten Position zueinander auf einem Resonantormontagerahmen angeordnet sind. Solche Einrichtungen sind bekannt. Es haftet diesen aber der Mangel an, daß besonders für Anwendungen, die einen schnellen Pulsbetrieb erfordern und bei welchen eine hohe Gleichmäßigkeit aller Pulse verlangt wird, der mechanische Aufbau der bisher bekannt gewordenen Laser diesen Forderungen nicht gewachsen ist.

In der Zeichnung ist die Erfindung beispielsweise dargestellt.

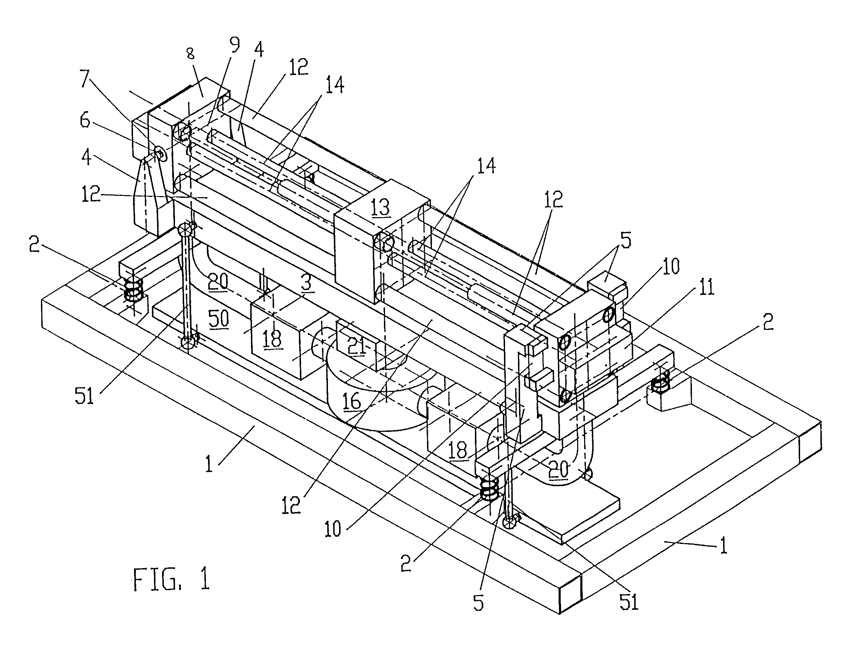

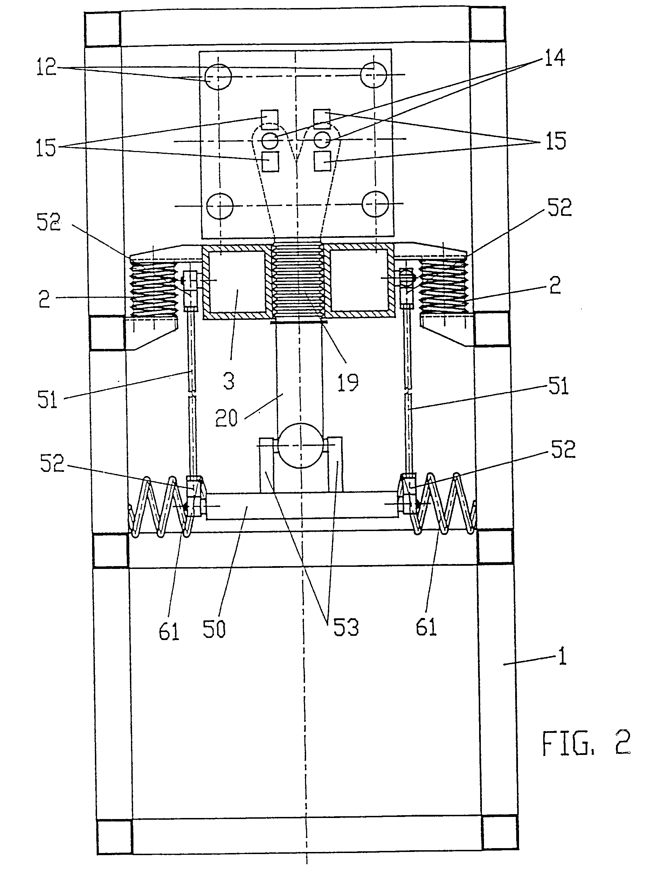

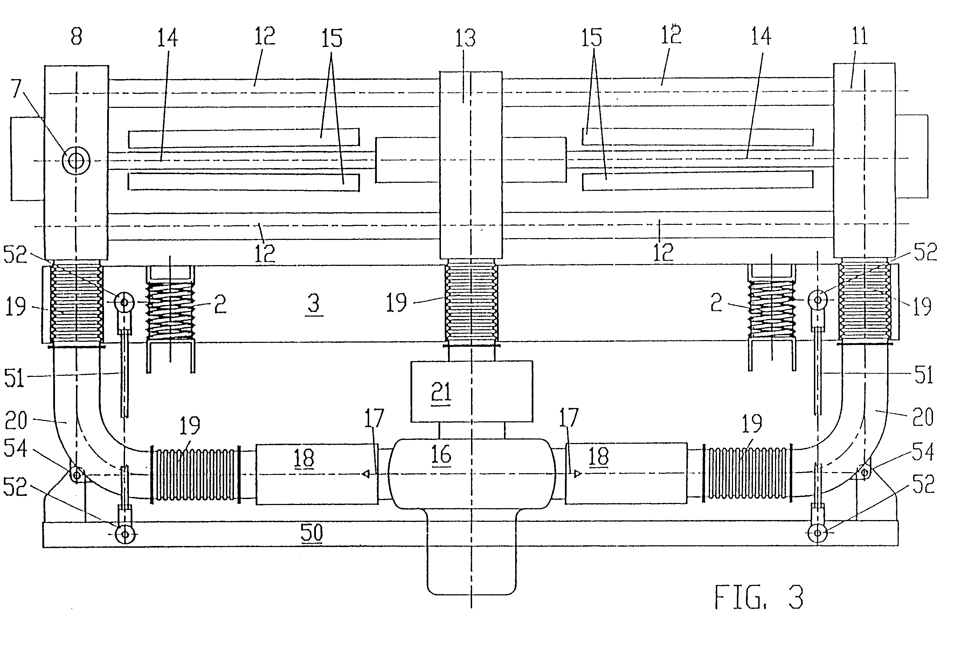

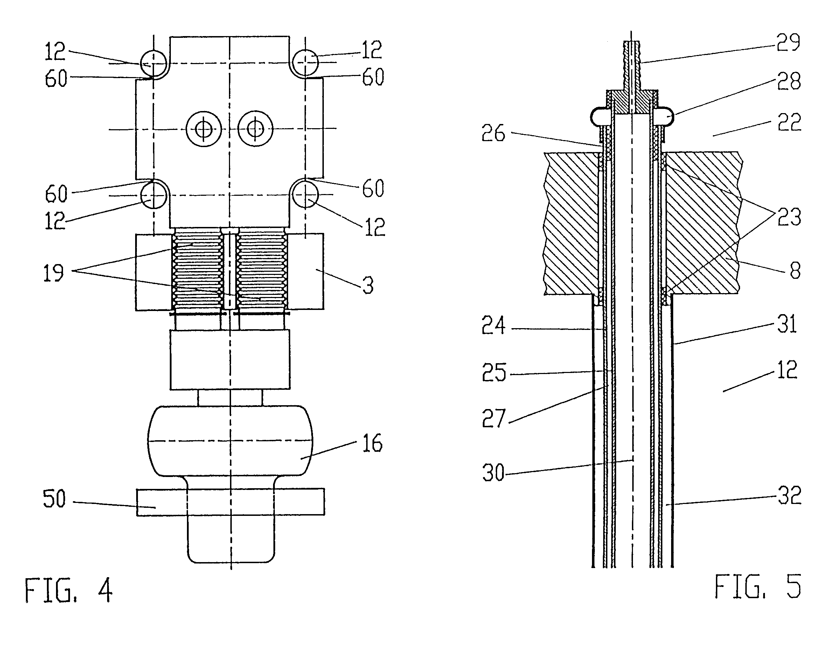

Fig. 1 zeigt schematisch die erfindungsgemäße Einrichtung in einem Schrägriß. Fig. 2 zeigt einen Querschnitt durch die erfindungsgemäße Einrichtung, Fig. 3 einen Längsschnitt derselben; die Fig. 4 bis 6 zeigen Einzelheiten dieser Einrichtung.

Auf einem Grundrahmen 1 ist über elastische Federn 2 ein steifer Resonatormontagerahmen 3 nachgiebig angelenkt. Dieser Resonatormontagerahmen 3 trägt ebenfalls steife Lagersäulen 4 am linken Ende und am gegenüberliegenden Ende Federlagersäulen 5. Von den Lagersäulen 4 reichen Zapfen 6 in Kugellager 7, die im linken Auskoppelblock 8 angeordnet sind und diesen eine geringfügige Drehung um die Achse 9 gestatten. Auf diese Weise werden Momente verhindert, die sonst Deformationen an den empfindlichen Baugruppen, insbesondere den optischen Baugruppen, auslösen könnten.

Am rechten Ende tragen die ebenfalls steifen Federlagersäulen 5 dünne und deshalb nachgiebige Blattfedern 10, an welchen der Umlenkspiegelblock 11 aufgehängt ist. Durch diese Anordnung wird die Einbringung von störenden Kräften, die in Richtug der Laserrohrachsen wirken würden, in die gegen Dejustierung empfindlichen Baugruppen zwischen Auskoppelblock 8 und Umlenkspiegel 11 verhindert.

Der Auskoppelblock 8 und Umlenkspiegelblock 11 sind zueinander über vier thermisch dehnungsarme Distanzstreben 12 in einer festen Distanz durch eine Klemmverbindung gehalten, die zwischen den beiden Blöcken 8 und 11 einerseits und den Distanzstreben 12 andererseits wirksam ist. Der Vorteil von vier Distanzstreben 12 gegenüber beispielsweise von nur drei oder zwei derartigen Streben lieft in einer geringeren Deformationsanfälligkeit gegenüber dynamischen Schwingungsanregungen. Die Konstruktion der Distanzstreben 12 ist ferner so ausgelegt, daß Kräfte in Richtung der Längserstreckung der Strebe bei nur geringen Verformungen übertragen werden, also die Distanzstrebe gegenüber solchen Kräften verhältnismäßig steif ist, während diese Strebe gegenüber Querkräften und Biegemomenten wesentlich nachgiebiger ist, also diesen Beanspruchungen gegenüber weich erscheint. Dies kann durch eine geeignete Wahl des Querschnittes und des äquatorialen Flächenträgheitsmomentes des Distanzrohres 24 erreicht werden, also durch Wahl des Durchmessers und der Wandstärke dieses Rohres beeinflußt werden. Das Distanzrohr 24 ist durch die Kunststoffisolierringe 23 biegesteif mit dem Auskoppelblock 8 oder am anderen Ende mit dem Umlenkblock 11 verbunden. Bei Bewegungen des Auskoppelblockes 8 relativ zum Umlenkblock 11 wird dann das Distanzrohr 24, über seine Länge gesehen, durch Biegung verformt. Das Kühlrohr 25, welches in den Büchsen 26 gleiten kann und daher in diesen Büchsen mit Spiel gelagert ist, übernimmt schon zufolge dieses Spieles keine Biegemomente in seinen Endpunkten und erleidet deshalb auch kaum eine Biegeverformung, verbleibt also in einen gerade gestreckten Zustand. Dies wird auch durch den Umstand unterstützt, daß das Kühlrohr sehr biegesteif ausgelegt ist. Dadurch wird die Flüssigkeit im Spalt 27 gezwungen, bei jedem Biegezyklus des Distanzrohres 24 in Umfangsrichtung des Spaltes das Kühlrohr 25 zu umströmen und es kommt wegen der Zähigkeit der Flüssigkeit im Spalt 27 zu einer beachtlichen Dämpfung der Relativ-Kippenbewegung zwischen den Blöcken 8 und 11. Auf diese Weise verwirklicht das erfindungsgemäße Prinzip der geometrisch baulichen Aufeinanderfolge von weichen und steifen Elementen eine ideale Parallelhaltung der beiden, die optischen Bauelemente tragenden Blöcke 8, 11. Die verhältnismäßige Steifheit der Distanzrohre 24 in Längsrichtung hält die Blöcke aufgrund ihrer geometrischen Anordnung parallel. Sollten dennoch Kippschwingungen auftreten, so werden diese aufgrund der relativen Biegeweichheit der Distanzrohre 24 und der Biegesteifheit der Kühlrohre 25 und der zwischen den beiden Rohren im engen Spalt 27 vorgesehenen zähviskosen Flüssigkeit stark bedämpft.

In der Mitte zwischen Auskoppelblock 8 und Umlenkspiegelblock 11 befindet sich der Ausströmblock 13. An diesem Ausströmblock 13 werden die Distanzstreben 12 mit einem Isolationsspalt 60 vorübergeführt, um eine thermische Beeinflussung der Distanzstreben 12 zu vermeiden, da der Ausströmblock 13 durch heißes abströmendes Lasergas eine höhere Temperatur annimmt. Durch diese Anordnung der Blöcke 8 und 11 werden die Blöcke 8, 11 auch bei Schwingungserregung durch Bodenkräfte auf gleicher Distanz und vor allem parallel zueinander gehalten.

Zwischen dem Auskoppelblock 8 und Ausströmblock 13 und ebenso zwischen letzterem und dem Umlenkspiegelblock 11 sind Laserrohre 14 vorgesehen, die von einem Gasgemisch durchströmt werden. Dieses Gasgemisch wird durch ein elektrisches Hochfrequenzfeld angeregt, welches zwischen den HF-Elektroden 15 wirksam ist. Diese HF-Elektroden 15 sind so angeordnet, daß sie in Richtung der Gasströmung einen stetig wachsenden Abstand zum Laserrohr 14 einnehmen, sie liegen also im Bereich der Blöcke 8 und 11 näher dem Laserrohr 14 als im Bereich des Mittelblockes 13.

Zur Aufrechterhaltung der Gasströmung ist eine Pumpe 16 angeordnet, von welcher zwei Teilgasströme 17 über Nachkühler 18, Balgenkompensatoren 19 und Rohrkrümmer 20 in den Auskoppelblock 8 und dem Umlenkspiegelblock 11 eingeleitet werden. Die Balgenkompensatoren 19 dienen sowohl zur Abkopplung dynamischer Kräfte aus der Pumpe 16 also auch zur Abkopplung thermischer Dehnungen dieser Pumpe 16 und solcher der Nachkühler 18, welche sonst die Blöcke 8 und 11 in ihrer Lage verändern würden. Von den beiden Blöcken 8, 11 strömt das Gas in vier parallelen Teilströmen durch die vier Laserrohre 14, in welchen das Gas durch das hindurchgreifende Hochfrequenzfeld angeregt wird, dadurch in den Laserzustand gelangt und hierbei stark erwärmt wird. Im Ausströmblock 13 werden jeweils zwei der vier Gasteilströme vereinigt und strömen von hier nach einer 90 Grad-Umlenkung durch die beiden Vorkühler 21 wiederum in die Ansaugöffnung der Pumpe 16. Diese Pumpe 16 ist eine Turbo- oder Fliehkraftpumpe, die das im Vorkühler 21 angekühlte Gas wiederum auf den Anfangsdruck verdichtet, weil dieses während des Durchströmens durch die einzelnen Leitungsabschnitte, ganz besonders aber in den Laserrohren 14, starke Druckverluste erlitten hat.

Die Pumpe 16 ist gemeinsam mit dem Vorkühler 21 und den Nachkühlern 18 auf einem steifen Pumpenrahmen 50 montiert. Dieser ist über Pendelhängestützen 51 am Resonatormontagerahmen 3 angelenkt. Die Pendelhängestützen 51 tragen an ihren Enden Kugelgelenke 52, die nur ein Pendeln der Pendelhängestützen 51 um ihre Endpunkte zulassen. Auf diese Weise könne nur Kräfte in Richtung der Achsen der Pendelhängestützen 51 übertragen werden und es wird eine Einleitung von Unwuchtrestkräften aus der Pumpe 16, die ja im wesentlichen normal zur Richtung der Pumpendrehachse, also in horizontalen Richtungen, wirken, in den Resonatormontagerahmen 3 und damit in den Resonator weitgehend verhindert. Gemäß einem weiteren Grundzug der Erfindung ist daher die Achsrichtung der Pendelhängestützen 51 zu jener der Pumpenachse parallel.

Am Pumpenrahmen 50 sind ferner Kragstützen 53 angebracht, die über Gelenke 54 die Rohrkrümmer 20 am Pumpenrahmen 50 abstützen. Der Mittelpunkt des Gelenkes 54 fällt hierbei genau mit dem Schnittpunkt der Wirkungslinien der auf die Endquerschnitte der Rohrkrümmers 20 einwirkenden Unterdruckkräfte zusammen.

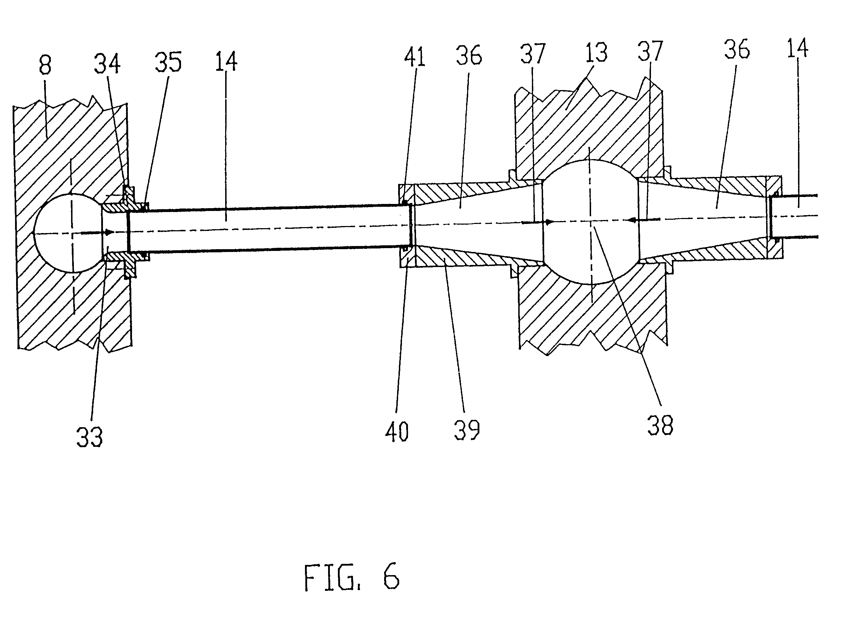

In der Fig. 5 ist eine Distanzstrebe 12 aufgeschnitten. Das Ende 22 der Distanzstrebe 12 wird über Kunststoffisolierringe 23 im Auskoppelblock 8 durch eine Klemmverbindung festgehalten. Diese Kunststoffisolierringe 23 halten unmittelbar das Distanzrohr 24, welches aus einer Invarlegierung oder kohlenstoffaserverstärktem Kunststoff bestehen kann. Durch das Distanzrohr 24 läuft möglich konzentrisch eine Kühlrohr 25, welches an beiden Enden des Distanzrohres 24 in Büchsen 26 relativ zu diesem in Achsrichtung gleiten kann.

Im Spalt 27 zwischen Kühlrohr 25 und Distanzrohr 24 ist ein flüssiges Medium eingebracht, welches sowohl zur Wärmeübertragung als auch zur Bedämpfung mechanischer Schwingungen dient. Aus diesem Grunde sind Flüssigkeiten, wie Glyzerin, Glyzerin-Wassermischungen oder Mineralöle mittlerer Viskosität, gut geeignet. Da insbesondere während des Transportes des Einrichtung thermische Dehnungen dieser Flüssigkeit auftreten können, wird durch eine wulstförmige Gummimuffe 28 an jedem der beiden Enden der Einrichtung ein Ausgleichsvolumen vorgesehen, welches eine größere oder geringere Menge der Spaltflüssigkeit aufnehmen kann. Natürlich muß dann zwischen der Büchse 26 und dem Kühlrohr 25 ein zumindest kleiner Spalt vorgesehen sein, um das Durchtreten einer Ausgleichsmenge von Spaltflüssigkeit zu gestatten. Das Kühlrohr 25 trägt an seinen Enden dicht eingeklebte Schlauchanschlußstücke 29, durch welche eine geringe Menge an möglichst gleichmäßig temperierten Kühlwasser hindurchtreten kann. Dieses Kühlwasser strömt dann im Innenraum zum gegenüberliegenden Ende des Kühlrohres 25 und hält hierbei das Kühlrohr auf gleichmäßiger Temperatur. Das Kühlrohr 25 überträgt dann über die Flüssigkeit im Spalt 27 diese konstante Temperatur an das Distanzrohr 24. Ein Wärmeschutzrohr 31 aus Aluminium sorgt gemeinsam mit einem Luftspalt 32 dafür daß von außen eingestrahlte oder durch Konvektion übermittelte Wärme vom Distanzrohr weitgehend abgehalten wird.

In Fig. 6 ist eine weitere Einzelheit des Gaskreislaufes dargestellt. Wie bereits erwähnt, erleidet das Gas während des Strömens durch das Laserrohr einen Druckverlust durch die Wandreibung. Ein weiterer Druckabfall fällt zufolge der Beschleunigung des Gases durch die starke Erwärmung während des Laserprozesses an. Die Geschwindigkeit kann aus diesem Grunde innerhalb des Laserrohres Schallgeschwindigkeit erreichen, aber aus physikalischen Gründen diese zumindest im zylindrischen Abschnitt nicht überschreiten. Um die Druck- und Strömungsverluste möglichst gering zu halten, wird erfindungsgemäß ein abgerundeter Einlauf 33 am Eintritt der Strömung in das Laserrohr 14 vorgesehen. Aus fertigungstechnischen Gründen ist dieser abgerundete Einlauf 33 durch ein Einlaufflanschstück 34, welches gegenüber dem Laserrohr 14 mit einem O-ring 35 abgedichtet ist, verwirklicht.

Nach einem weiteren Grundzug der Erfindung wird am Ende des Laserrohres 14 ein Diffusor 36 angeordnet, welcher die sehr hohe Strömungsgeschwindigkeit des Gases verlangsamt und dadurch einen Teil der Gasgeschwindigkeit wiederum in statischen Druck rückverwandelt. Man erkennt aus der Zeichnung, daß Gas aus zwei Teilströmen, welche in Richtung der Pfeile 37 durch die Laserröhren strömen, bei 38 im Ausströmblock 13 gegeneinander strömt. Ohne Diffusor entstünden dadurch extrem hohe Verluste. Das Diffusoraufnahmestück 39 trägt einen Dichtflansch, der mittels eines hitzebeständigen O-Ringes 41 wiederum gegen das zylindrische Laserrohr 14 dichtet. Diese Bauform gestattet die Verwendung äußerst wirtschaftlich herzustellender Laserrohre.

Die Erfindung ist auf die dargestellten Ausführungsbeispiele nicht beschränkt. So können die Stahlfedern 2 und 61 auch durch Gummifedern, Gummiluftfedern sowie Kombinationen von allen diesen Typen ersetzt werden.

## Patentansprüche

1. Einrichtung zur Erzeugung eines Laserstrahles mit einem Laserresonator bestehend aus Laserresonatorröhren (14), einem Umlenkspiegelblock (11) und einem Auskoppelblock (8), die in einer bestimmten Position zueinander auf einem Resonantormontagerahmen angeordnet sind, dadurch gekennzeichnet, daß in einer geometrisch baulichen Aufeinanderfolge steife und nachgiebige Elemente für die Halterung der optischen Bauelemente (11, 8) und der Laserresonatorröhren (14) vorgesehen sind.

2. Einrichtung nach Anspruch 1, dadurch gekennzeichnet, daß der Resonatormontagerahmen (3) über elastische Federn (2) an einem steifen Grundrahmen (1) abgestützt ist.

3. Einrichtung nach Anspruch 1 oder 2, dadurch gekennzeichnet, daß ein Pumpenrahmen (50) über Pendelhängestützen (51) am Resonatormontagerahmen (3) abgestützt ist und eine auf dem Pumpenrahmen (50) befestigte Pumpe (16) über elastische Balgenkomponsatoren (19) strömungsmäßig mit dem Umlenkspiegelblock (11), dem Auskoppelblock (8) und einem Anströmblock (13) verbunden ist.

4. Einrichtung nach Anspruch 3, dadurch gekennzeichnet, daß die Pendelhängestützen (51) parallel zur Pumpenachse gerichet sind.

5. Einrichtung nach einem der Ansprüche 1 bis 3, dadurch gekennzeichnet, daß am Anfang einer Laserresonatorröhre (14) ein abgerundeter Einlauf (33) und an dessen Ende ein Diffusor (36) zur Rückwandlung von Geschwindigkeitsenergie in Druckenergie vorgesehen ist (Fig. 6).

6. Einrichtung nach einem der vorhergehenden Ansprüche, dadurch gekennzeichnet, daß zwischen Auskoppelblock (8) und Umlenkspiegelblock (11) vier Distanzstreben (12) vorgesehen sind, welche die in diesen Blöcken montierten optischen Bauelement in einer parallelen Lage zueinander und in einem von der Temperatur unabhängigen Abstand halten.

7. Einrichtung nach Anspruch 6, dadurch gekennzeichnet, daß die Distanzstreben (12) mit einem Isolationsspalt (60) am Anströmblock (13) vorübergeführt sind.

8. Einrichtung nach Anspruch 6 oder 7, dadurch gekennzeichnet, daß die Distanzstreben (12) aus einem inneren Kühlrohr (25), einem Spalt (27) mit einem flüssigen Medium zur Wärmeübertragung und mechanischer Schwingungsbedämpfung und einem äußeren Distanzrohr (24) bestehen und daß gegebenenfalls ein Wärmeschutzrohr (31) und ein Isolationsspalt (32) vorgesehen sind.

9. Einrichtung nach Anspruch 8, dadurch gekennzeichnet, daß an den Enden der Distanzstreben (12) wulstförmige Gummimuffen (28) ein Ausgleichsvolumen für die temporäre Aufnahme des flüssigen Mediums bei Temperaturschwankungen bilden.

10. Einrichtung nach einem der vorhergehenden Ansprüche, dadurch gekennzeichnet, daß die Distanzstreben (12) gegen Kräfte in der Längserstreckung im wesentlichen steif, gegenüber Beanspruchungen durch Querkräfte und Biegemomente jedoch nachgiebig sind.

11. Einrichtung nach einem der vorhergehenden Ansprüche, dadurch gekennzeichnet, daß das oder die Kühlrohre (25) biegesteif ausgelegt ist (sind).

12. Einrichtung nach einem der vorhergehenden Ansprüche, dadurch gekennzeichnet, daß zwischen den Distanzrohren (24) und den Kühlrohren (25) in einem engen Spalt (27) eine zähviskose Flüssigkeit vorhanden ist.
